# EUROPEAN PATENT APPLICATION

(11) **EP 4 722 022 A1**
(43) Date of publication of application: **08.04.2026**
(21) Application number: 24204996.3
(22) Date of filing: 07.10.2024
(51) Int. Cl.: B60L 53/10, B60L 53/302, B60L 53/62

(54) **A METHOD OF CONTROLLING THE POWER BLOCK OF DIRECT CURRENT ELECTRIC VEHICLE CHARGING STATIONS**

(71) Applicant: Ekoenergetyka - Polska Spolka Akcyjna, 66-002 Zielona Gora (PL)
(72) Inventor: KANIEWSKI, Jacek, 66-004 Zielona Gora (PL); JARNUT, Marcin, 66-004 Zielona Gora (PL); BUCIAKOWSKI, Mariusz, 68-200 Zary (PL); KLIMKOWICZ, Kamil, 67-100 Nowa Sol (PL); MANIARSKI, Robert, 67-415 Kolsko (PL)
(74) Representative: Grzelak, Anna

(57) **Abstract**

The subject matter of the invention is a method of controlling the power block of a direct current charging station for electric vehicles that reduces the level of noise emitted into the environment by the charging station.

A method of controlling the power block of a DC electric vehicle charging station consisting of a certain **(N)** number identical air-cooled electronic power converters **(AC/DC)** with known characteristics of generated noise depending on their output power and the rotational speed of the cooling system forcing fans, wherein comprises the following steps: the acoustic characteristics (**SPLi=f(Pi)**) dependence of sound pressure level for each individual **AC/DC** converter depending on the converter power are determined; parameters such as the power limitation of a single converter **(Pi_lim)** and the corresponding reduction of the sound pressure level **(SPLi_lim),** or the maximum value of the efficiency coefficient **(ηi_max)** are determined; the acoustic characteristic **(SPL=f(PDC(1))** for sequential control with output power limitation **(1)** and the acoustic characteristic **(SPL=f(PDC(4))** for simultaneous control with power limitation **(2)** are determined, based on the obtained characteristics, the threshold power value is determined **(PDC_ST),** at which the sound pressure level values for the two methods of controlling are equal.

## Description

### FIELD OF TECHNOLOGY

The subject matter of the invention is a method of controlling the power block of a direct current charging station for electric vehicles that reduces the level of noise emitted into the environment by the charging station.

### STATE OF THE ART

During the charging cycle of an electric vehicle battery by a charging station, power losses occur when alternating current (AC) is converted to direct current (DC) by the power electronics converters (AC/DC) of the charging station. The value of the losses, which are almost entirely converted into heat, amounts to approximately 5% of the current charging station operation power. In the case of fast DC charging stations with power in the hundreds of kilowatts (kW) range, and in the case of charging HUBs with power in the megawatts (MW) range, the amount of heat released is significant, causing the charging station to heat up. Due to the limiting operating parameters of the charging station and the service life of its components, the heat resulting from power losses must be effectively dissipated from the charging station. The most commonly used method of cooling AC/DC converters is forced air flow cooling. The electronic power converters installed in charging stations are equipped with high-speed and forced-air fans that generate air flow through the converter. The intensity of the operation of the forced-air fans depends on the ambient temperature and the internal temperature of the electronic power converters. The internal temperature of the converters is a derivative of the current and power at which the converter power block of the charging station is currently operating. High charging power and, consequently, high charging current cause the release of large amounts of heat and the need to effectively dissipate it from the charging station.

The intensively working fans of the electronic power converters are the main source of noise emitted into the environment by the electric vehicle charging station. Permissible sound pressure levels, i.e. noise emitted into the environment by industrial systems and equipment, are strictly defined in the relevant noise standards and directives. Depending on the nature of the environment, e.g. industrial or residential areas, sanatoriums, hospitals, schools, health resorts, and the time of day, the standards allow different maximum values of the sound pressure level. Environmental noise reduction requirements require charging station manufacturers to limit noise emissions and propagation by these devices. On the other hand, the increasing power of charging stations and the increasing volumetric power density of the power converter blocks are not conducive to reducing the noise level.

From the professional literature on the subject and existing industrial and market solutions, mainly passive methods of reducing the level of noise emitted into the environment are known and used. They involve the implementation of various types of silencers and acoustic materials with a high sound absorption level. Unfortunately, passive methods are not very effective in the low-frequency range, which is dominant in the operation of fan cooling systems installed in electric vehicle charging stations. Furthermore, the introduction of additional acoustic partitions or silencers into the airflow system in the charging station causes deterioration of the airflow parameters and introduces undesirable turbulence, which negatively affects the cooling of the charging station and the efficiency of collecting thermal energy from the power blocks.

Active noise cancelling (ANC) methods are also implemented. The methods are based on reducing existing noise by introducing controllable secondary sources that affect the production, radiation, transmission and reception of the original main noise source. The principle of operation of these solutions is based on the emission of an acoustic wave in phase opposite to the sound wave of the main sound source from a secondary sound source. However, solutions of this type require the use of wave guides with dimensions appropriate to the multiple of the length of the attenuated sound wave, which in the case of charging stations, where compact design and high volumetric power density are a priority, is very difficult to implement.

A US patent no. US11731519B2 describes a DC system for charging electric vehicles comprising a charger, an A/C unit, and a control unit. The charger is configured to supply direct current to the electric vehicle, the A/C unit is configured to heat and/or cool the charging system, the A/C unit and/or the charger emit noise, and the control unit is configured to control the supply of direct current in accordance with the noise level.

A German patent application no. DE102020003533A1 describes a method of operating a power supply station that is configured to supply electric power to electric vehicles, wherein the power supply station comprises a plurality of charging functional components (performing a charging function) comprising a connection line connected to a linking component and/or a switching component assigned to the connection line and/or the linking component and/or a controller for carrying out the charging process and/or electronic power unit with an AC/DC converter and/or with a DC/DC converter. The power supply station also has a fan for cooling at least one of the components performing the charging function, comprising the following steps of the method: in a normal operating state, a target charging power is supplied via a connection component of the power supply station, and the fan is operated at a controlled speed, wherein the fan speed is set such that a permissible maximum operating temperature of the load is not exceeded. In a quiet operating mode, the control system automatically reduces the charging power supplied via the connection component such that a specified limiting noise level is not exceeded, wherein the power supply station is brought to a quiet operating state and/or back from the normal operating state as a function of time. The invention also relates to a power supply station configured to implement this method.

Both known passive and active methods affect the effects of sound sources working and emitting noise into the environment. They do not directly affect the source of the sound (the cause) in a way that reduces the noise emitted into the environment. Noise reduction at the sound source level is the most effective and efficient method of reducing noise emissions into the environment.

Some manufacturers of AC/DC power electronic converters dedicated to DC electric vehicle charging stations enable intentional activation of the "silent mode". Activation of this operating mode limits the available output power of the converter by a specified fixed value. This limit is often 40-50% of the rated power, and the level of power reduction cannot be arbitrarily changed. In real-life implementations, this function is rarely used due to excessive limitation of the output power and deterioration of the efficiency factor of the charging station when operating at low load.

The well-known and most commonly used method of controlling the converter power block of an electric vehicle charging station is to evenly distribute the charging power to all available converters. However, in the case of low demand for output power, due to the low load factor of each of the working converters, this method translates into a low-efficiency factor of the entire charging station. There are also known methods of sequential control of the power block converters, where the output power demand of the charging station is covered by the smallest number of power block converters necessary to cover this demand. However, in this case, each of the N-1 working converters operates at maximum output power. Only the last converter, which can also operate at maximum output power, supplements this power to the required charging power demand. Working at maximum load is associated with a large amount of heat release and, consequently, an increase in noise emissions generated by fan cooling systems.

The existing solutions do not reduce noise significantly by influencing the optimisation of operating parameters and directly controlling the operating parameters of converter power blocks in electric vehicle charging stations. There are also no methods and ways of optimising the operation of electronic power converters and power blocks of charging stations for electric vehicles that take into account the reduction of noise emitted by the charging station into the environment, while maintaining a high efficiency factor and functionality of the charging station.

### DISCLOSURE OF THE INVENTION

The technical problem solved by the invention is to reduce the noise level generated by the power block of a DC charging station for electric vehicles, which is achieved by controlling the output power of the AC/DC converters by limiting the sound pressure level (SPL) generated by the converter cooling system.

In light of the described state of the art, the aim of the present invention is to overcome the indicated disadvantages and to provide a method for controlling a direct current charging station for electric vehicles, whereby low sound pressure levels are obtained by controlling the output power of AC/DC converters, with a satisfactory efficiency coefficient of the charging station.

The method of controlling the power block of a DC electric vehicle charging station consisting of a specified number of identical air-cooled electronic power converters with known noise generation characteristics depending on their output power and the rotational speed of the cooling system's blowing fans wherein includes the following stages:
**a)** the acoustic characteristic of the dependence of the sound pressure level for each individual **AC/DC** converter is determined, depending on the converter power;
**b)** parameters such as the power limitation of a single converter and the corresponding reduction in sound pressure level, or the maximum value of the efficiency coefficient are determined;
**c)** the acoustic characteristics are determined for sequential control with output power limitation and the acoustic characteristics for simultaneous control with power limitation.
**d)** Based on the obtained characteristics, a threshold power value is determined at which the sound pressure level values are equal for the two control methods.

Preferably, at stage **a)** the efficiency factor as a function of the converter power and/or the power factor **PF** and/or the higher harmonic distortion factor **THD-I** are determined.

Preferably, at the stage **a)** a limitation of the output power of a single converter is introduced, based on the acoustic characteristics of a single converter, reducing the output power of the converter by a value up to the value at which the acoustic pressure level of a single converter is reduced to the required value, by a value which is achieved indirectly by reducing the rotational speed of the **AC/DC** converter pressure fans.

Preferably, in the amount by which the output power of a single converter and/or converter power block is limited, additional requirements and/or efficiency coefficient parameters of the single converter and/or converter power block are taken into account.

Preferably, depending on the current power demand, the smallest number of working power block converters is selected from the number of all available power block converters, each of which operates with power limitation, and the output power of the charging station is the sum of the powers of the working **AC/DC** converters.

Preferably, **AC/DC** converters, depending on the current power demand, are turned on/off sequentially one after the other, and the turn-on/off threshold of the next converter is determined by the power limitation value.

Preferably, the output power demand of the charging station is covered by **AC/DC** converters the most spatially distant from each other in the converter power block.

Preferably, at stage **d)** a threshold value of output power is introduced, resulting from the acoustic characteristics of the converter power block, below which the power block control is sequential with the output power limited to the value of each of the **AC/DC** converters, and above which the control is performed simultaneously (**4**) with the output power limited to the value of each **AC/DC** converter.

The advantage of the applied solution is the lack of interference in the construction of the device itself, and this can be done on existing sets only by using appropriate control or software.

Another advantage is the simplicity of the method and efficiency at low power, which has not been offered so far.

### BRIEF DESCRIPTION OF THE DRAWING FIGURES

For a better understanding of the invention, it is illustrated in the examples and in the accompanying drawings, where:
**Fig. 1** - A simplified general view of a DC electric vehicle charging station with a converter power block;
**Fig. 2** - A graph of the sound pressure level **SPLi=f(Pi)** characteristics with a single **AC/DC** converter;
**Fig. 3** - A graph including the energy characteristics of the converter (efficiency coefficient, **PF** and **THD-I**)when selecting the power limitation value **Pi_lim**
**Fig. 4** - A method of controlling the converter power block;
**Fig. 5** - An example of the output power characteristic in the charging cycle;
**Fig. 6** - A graph of the acoustic characteristics **SPL=f(PDC)** with **Type 1** control method, with **type 4** control method and the characteristics obtained as a result of mixed control;
**Fig. 7****-** Algorithm for implementing the control method;
**Fig. 8** **-** Control method algorithm.

The method presented in the attached figures is shown only as an illustration, while the final shape and characteristics of the graphs depend on the individual applications and the individual charging stations' characteristics.

### EXECUTIONS OF THE INVENTION

The following examples illustrate the invention without any limitations.

### Example 1. Method of controlling

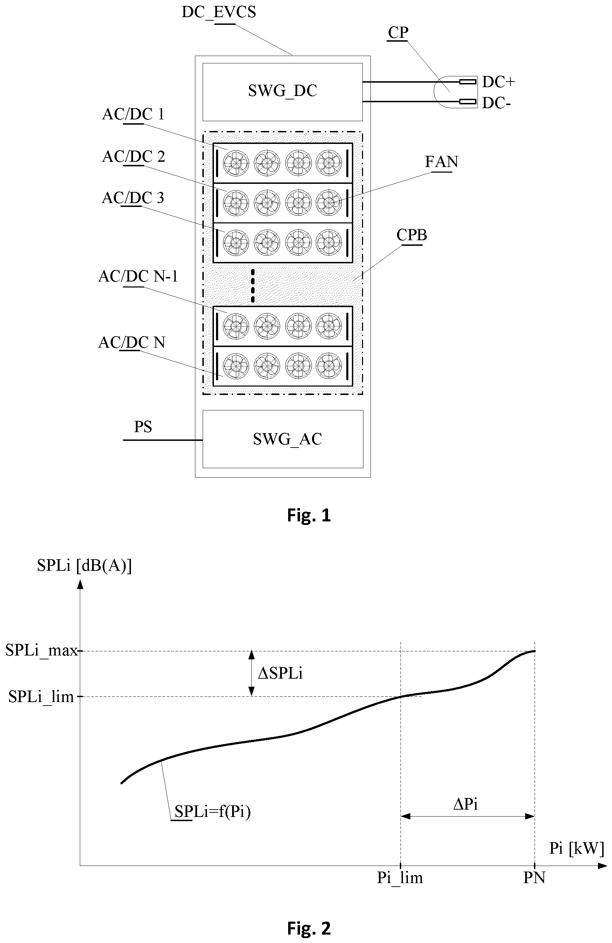

The method of controlling the converter power block **CPB** of a DC vehicle charging station **DC_EVCS** being the subject matter of the invention, consists in appropriate control of the output power of the **AC/DC** converters, so as to limit the sound pressure level **SPL** generated by the converter cooling systems. The converter power block **CPB** is made up of **N** number of identical **AC/DC** converters cooled by air, the flow of which is generated by forced fans **FAN,** installed on **N** number of **AC/DC** converters, as shown in figure **Fig. 1****.** The rotational speed of the forced fans determines the cooling intensity and, as a result, the level of acoustic pressure generated by each of the working converters **SPLi,** depends on the current power at which the converter operates, determining the acoustic characteristics of the converter **SPLi=f(Pi),** as shown in the example in **Fig. 2****.**

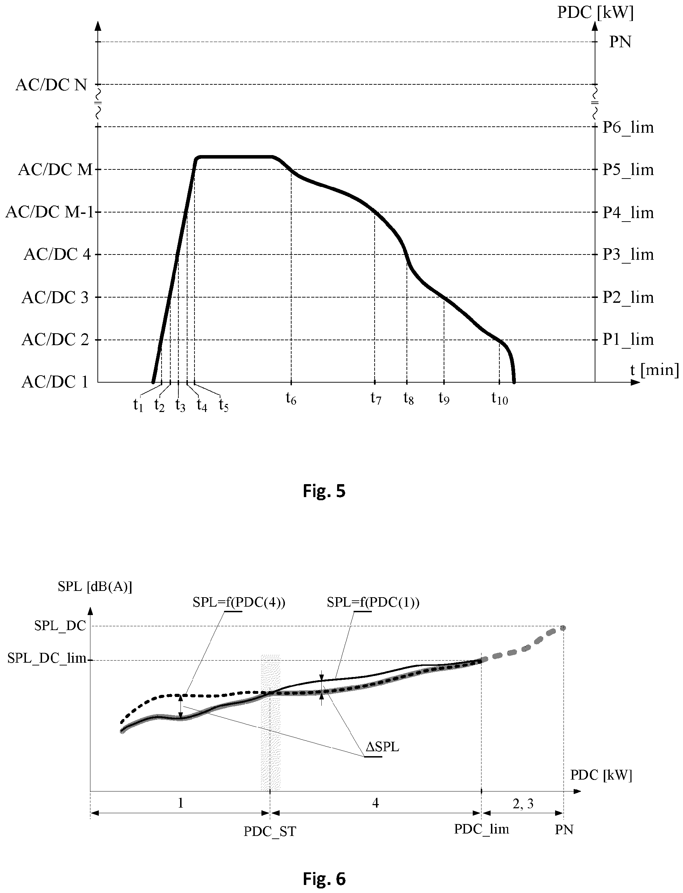

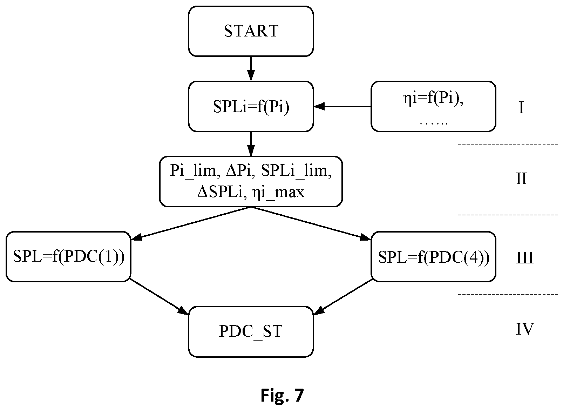

The methods includes the stages that are presented in **Fig. 7****:**
**e)** the acoustic characteristics of dependencies of sound pressure level **SPLi=f(Pi)** are determined for each individual **AC/DC** converter, depending on the converter power, as shown in **Fig. 2****;**
**f)** based on the determined characteristics, parameters such as the power limit of a single converter **Pi_lim** and the corresponding reduction in sound pressure level **SPLi_lim,** or the maximum value of the efficiency coefficient **ηi_max** are determined;
**g)** taking into account the parameters determined in the previous stages, the acoustic characteristics **SPL=f(PDC(1))** in sequential control with the output power limit **1** and acoustic characteristics **SPL=f(PDC(4))** when controlled simultaneously with the power limit **2** are determined.
**h)** based on the obtained characteristics, the threshold power value **PDC_ST** is determined at which the sound pressure level values for the two control methods are equal, as shown in **Fig. 6****.**

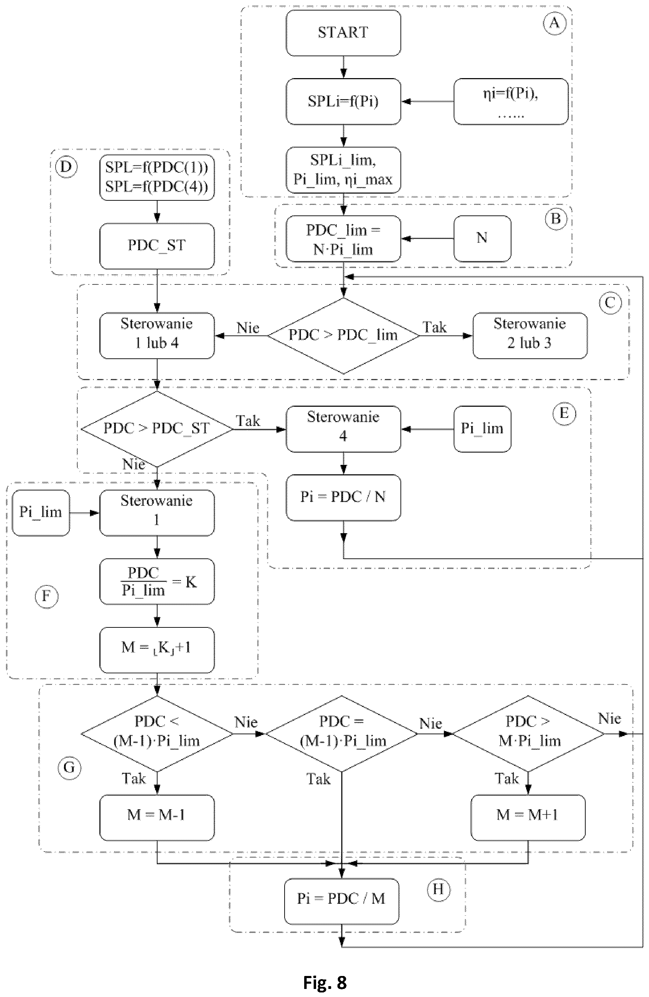

The method of controlling the CPB converter power block of a DC electric vehicle charging station **DC_EVCS** according to the invention is shown in **Fig. 8****.** According to it, the acoustic characteristics of a single converter **SPLi=f(Pi)** are obtained by means of measurements. The required value of sound pressure level **SPLi_lim** reduction is determined, which is achieved by implementing an output power limit to the value of **Pi_lim.** The algorithm is divided into parts designated A to H.

In this part of the algorithm describing the control method **(Part A)** - all designated parameters are input data. In the further **(Part B)** the total number of **AC/DC** converters is entered in the converter power block **CPB.** On this basis, taking into account the power limit of a single converter **Pi_lim,** the power limit of the charging station **PDC_lim** is determined.

In the next step **(Step C)** - the control method is determined. If the power demand **PDC** is greater than the limit value **PDC_lim,** the algorithms reducing the sound pressure level are not implemented and the station operates with sequential control **2** or simultaneous control **3** without limiting the output power. If the condition is not met, sequential control **1** or **4** is activated with output power limitation. At the same time, based on the acoustic characteristics of the converter power block **CPB** determined by measurements in sequential control with output power limitation **SPL=f(PDC(1))** and at the same time **SPL=f(PDC(4)),** the power value **PDC_ST** is determined at which the sound pressure level for the two control methods **1** and **4** reaches the same value of the algorithm **(Part D).**

In **Part E** of the algorithm, the power-limited control method is selected. If the power demand **PDC** is greater than the value **PDC_ST,** control method **4** is implemented simultaneously with power limitation **Pi_lim.** In this case, the required power **PDC** is distributed evenly to all **N** number of converters installed in the converter power block **CPB.** If the power demand **PDC** is below value **PDC_ST** - the sequential control method **1** is implemented with output power limitation. Implementation of control method **1** starts with determining the smallest **M** number of **AC/DC** converters needed to cover the output power demand of the station **PDC.**

**Part F** of the control algorithm is responsible for implementing this task. Since the power characteristics during the charging cycle change as shown in **Fig. 5****,**
in **Parts G,** the **M** number of converters necessary to cover the PDC charging power demand is determined continuously. If the output power demand **PDC** has decreased and can be covered by a smaller number than the **M** number of **AC/DC** converters determined in the previous step, the **M** number is reduced by **1 (M-1).** If the output power demand **PDC** has increased and the designated **M** number of **AC/DC** converters is not sufficient to cover it, the **M** number is increased by **1 (M+1).** After determining the **M** number of converters necessary to cover the **PDC** power demand, this power is distributed among all **M** number of converters.

In the method according to the invention, the output power reduction threshold **Pi_lim** of the single converter corresponding to the required reduction in the sound pressure level **SPLi_lim** is determined based on the acoustic characteristics **SPLi=f(Pi)** of a single **AC/DC** converter. As a result, a limit for the output power of each converter to the value **Pi_Lim** is obtained, at which a reduction in the level of the generated sound pressure is obtained by the value **ΔSPLi** to the value **SPLi-lim.**

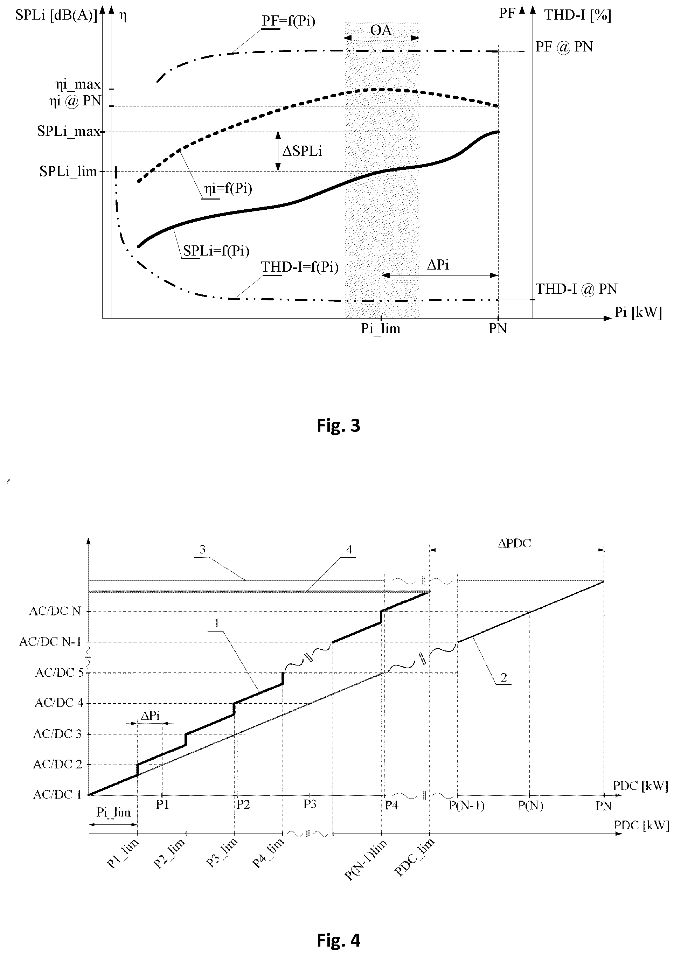

Output power demand **PDC** of the electric vehicle charging station is covered with the minimum necessary **M** number of **AC/DC** out of the **N** amount of converters available in the converter power block **CPB.** The converters are switched on in sequential method **1,** taking into account the designated level of output power reduction **Pi_lim** for each of the converters, as shown in **Fig. 4****.**

Once the first **AC/DC** converter reaches the **Pi_lim** threshold, the second converter is also switched on. If the power demand is higher and the second converter reaches the **Pi_lim** output power threshold value, yet another converter is switched on until the power demand **PDC** is covered. When the output power demand **PDC** of the charging station decreases during the charging cycle, converters are also disconnected sequentially taking into account the power reduction threshold **Pi_lim** in reverse order. As soon as the **M** converter reduces the charging power to a value close to zero, it is disconnected and the power demand **PDC** is covered by the **M-1** number of converters. As the power demand continues to decrease, in the next step the **M-1** converter turns off and the power is covered by the **M-2 number of converters,** etc., as in the example for the number of converters **M=6** shown in **Fig 5****.** Output power demand **PDC** can also be covered by simultaneous control with the output power reduction **4.** In this case, the output power demand **PDC** is divided into all **N** converters in the power block, but each of them operates with the output power limited to the **Pi_lim** value. If the output power demand **PDC** is greater than the power limit value **PDC_lim,** the converter power block operates with the control methods **2** or **3** without reducing the output power of individual converters.

In addition, if the power demand **PDC** is much lower than the charging station power reduction threshold **PDC_lim,** the **AC/DC** converters the most spatially distant from each other in the converter power block **CPB** are switched on to cover this demand. This solution allows to avoid the accumulation of heat emitted as a result of power losses in one place of the converter power block **CPB,** which has a positive effect on reducing the rotational speed of the forcing fans **FAN** cooling system and, consequently, the noise generated by the fans.

Additionally, in order to reduce the sound pressure level generated by the charging station **DC_EVCS** mixed control is introduced, as shown in **Fig. 6****.** Based on the acoustic characteristics **SPL=f(PDC)** of the converter power unit **CPB** designated for the sequential control method **1** and the simultaneous control method **4** with the reduction of the output power, a power threshold value **PDC_ST** is introduced, at which the sound pressure level is equalized for two control methods - the sequential control method **1** with a reduction of output power and the simultaneous control method **4** with output power reduction.

For the values below the threshold **PDC_ST,** the sequential control method **1** is more advantageous in terms of noise emission into the environment, whereas for the values above the threshold **PDC_ST,** the simultaneous control method **4** is more advantageous in terms of noise emission to the environment with output power reduction. In mixed control, the output power demand **PDC** up to the power threshold value **PDC_ST (0** < **PDC ≤ PDC_ST)** is covered by implementing sequential control method **1** with output power reduction. In the output power demand range **PDC** above **PDC_ST** and below **PDC-lim values (PDC_ST < PDC ≤ PDC_lim),** the output power demand **PDC** is implemented by means of simultaneous control using method **4** with output power reduction.

### Example 2. Method of controlling

It is a control method similar to example 1 but with additional parameters that determine the selection of the output power reduction threshold **Pi-lim.**

In the method according to the invention, in addition to the acoustic characteristics of a single converter **SPLi=f(Pi),** at the research stage, energy and quality parameters such as the efficiency coefficient **ηi,** the power factor **PF,** the input current harmonic content factor **THD-**I etc. as well as the energy characteristics describing the influence of the converter operating point **AC/DC** on these parameters **(PF=f(Pi), THD-I=f(Pi), ηi=f(Pi))** are determined. In the method of controlling the power block according to the invention, characteristics describing the influence of energy and/or quality parameters are taken into consideration, and they are compared with acoustic characteristics, as shown in the example in **Fig. 3****.** As a result, the optimal range of **OA** is obtained, in which the most advantageous value of limiting the output power of each converter to the value **Pi_Lim** are located. The obtained value of power limitation allows not only to effectively reduce the generated sound pressure level by the value **ΔSPLi** to the value **SPLi_lim,** but also to maintain the high-efficiency values **ηi** and the power factor **PF,** at low values of the higher harmonic content of the input current **THD-I.** As a result, the noise generated by the charging station is reduced to an acceptable level, with satisfactory energy parameters of the converter power block **CPB.**

### LIST OF NOTATIONS:

- **1.** -: Sequential control with output power reduction;
- **2.** -: Sequential control without output power reduction;
- **3.** -: Simultaneous control without output power reduction;
- **4.** -: Simultaneous control with output power reduction;
- **AC/DC** -: Alternating current/direct current converter
- **ANC** -: Active noise cancelling
- **CP** -: Charging plug;
- **CPB** -: Converter power block
- **DC+** -: Direct current positive pole;
- **DC-** -: Direct current negative pole;
- **DC_EVCS** -: Direct current electric vehicle charging station;
- **FAN** -: Electronic power converter forcing fan
- **M** -: Number of operating AC/DC converters;
- **N** -: Total number of AC/DC converters in the converter power block;
- **OA** -: Optimal area
- **PDC** -: Power direct current;
- **PDC_lim** -: Charging station power limit;
- **PDC_ST** -: Output power threshold at which the control method changes;
- **PF** -: Power factor
- **Pi** -: Single converter power;
- **Pi_lim** -: Power limit of a single converter;
- **PN** -: Nominal power;
- **PS** -: Power supply;
- **SPL** -: Sound pressure level;
- **SPL_DC** -: Sound pressure level generated by the charging station;
- **SPLi** -: Sound pressure level generated by a single converter;
- **SPLi_lim** -: Limited sound pressure level of a single converter;
- **SWG_AC** -: Alternating current switchgear;
- **SWG_DC** -: Direct current switchgear;
- **THD-I** -: Total harmonic distortion
- **η** -: Efficiency coefficient;
- **ηi** -: Single converter efficiency coefficient

## Claims

1. A method of controlling a power block of a DC electric vehicle charging station consisting of a certain number (**N**) of identical electronic power converters (**AC/DC**) air-cooled with known noise characteristics depending on their output power and the rotational speed of the cooling system's forcing fans **characterized in that** includes the following stages:
**a)** the acoustic characteristics (**SPLi=f(Pi)**) of dependence of sound pressure level for each individual converter **AC/DC** depending on the converter power are determined;
**b)** the parameters such as the power limit of a single converter (**Pi_lim**) and the corresponding reduction in sound pressure level (**SPLi_lim**), or the maximum value of the efficiency coefficient (**ηi_max**) are determined;
**c)** the acoustic characteristics (**SPL=f(PDC(1)**) in sequential control method with output power limitation (**1**) and acoustic characteristics **(SPL=f(PDC(4))** in simultaneous control method with power limitation (**2**) are determined;
**d)** based on the obtained characteristics, the threshold power value (**PDC_ST**), at which the sound pressure level values for the two control methods are equal is determined.

2. The method of controlling the power block according to Claim 1, **characterised in that** at stage **a)** the efficiency coefficient is determined as a function of the converter power (**ηi=f(Pi)**) and/or the power factor **PF** and/or the higher harmonic distortion factor **THD-I.**

3. A method of controlling the power block according to Claims 1-2, **characterised in that** at stage **a),** based on acoustic characteristics **(SPLi=f(Pi)),** a limit **(Pi_lim)** to the output power of a single converter is introduced, reducing the output power (**Pi**) converter by the value (**ΔPi**) to the value at which the sound pressure level (**SPLi**) of a single converter is reduced to the required value (**SPLi_lim**) by the value of (**ΔSPLi**), which is achieved indirectly by reducing the rotational speed of the **AC/DC** converter forcing fans.

4. The method of controlling the power block according to Claims 1 - 3 **characterised in that** value **(ΔPi)** by which the output power (**Pi**) of a single converter and/or converter power block (**CPB**) was limited, additional requirements and/or parameters of the efficiency coefficient of a single converter (**ηi**) and/or converter power unit (**CPB**) are taken into account.

5. The method of controlling the power block according to Claims 1 - 4 **characterised in that,** depending on the current power demand (**PDC**), the smallest number (**M**) of working power block converters (**CPB**) is selected from the number (**N**) of all available converters in the power block, each of which operates with power limitation (**Pi_lim**), and the output power (**PDC**) of the charging station is the sum of the power (**Pi**) of all working (**M**) converters **AC/DC**.

6. The method of controlling a power block according to Claims 1 - 5 **characterised in that** the **AC/DC** converters, depending on the current power demand (**PDC**), are switched on/off sequentially one after the other, and the switch-on/switch-off threshold of the next converter is determined by the power limitation value (**Pi_lim**).

7. The method of controlling a power unit according to Claims 1 - 6 **characterised in that** output power demand (**PDC**) of the charging station is covered by **AC/DC** converters the most spatially distant from each other in the converter power block (**CPB**).

8. The method of controlling a power unit according to Claims 1 - 7 **characterised in that** at stage **d)** a threshold value of the output power is introduced (**PDC_ST**), resulting from the acoustic characteristics (**SPL=f(PDC)**) of the converter power block (**CPB**), below which the power unit control is sequential (**1**) with the output power limited to the value (**Pi_lim**) of each **AC/DC** converter, and above which the control is carried out simultaneously (**4**) with the output power limited to the value (**Pi_lim**) of each **AC/DC** converter.
